(19) Europäisches Patentamt / European Patent Office / Office européen des brevets

(11) EP 1 524 904 B1

(12) **EUROPÄISCHE PATENTSCHRIFT**

(45) Veröffentlichungstag und Bekanntmachung des Hinweises auf die Patenterteilung:
**24.01.2007 Patentblatt 2007/04**

(21) Anmeldenummer: **03764924.1**

(22) Anmeldetag: **30.06.2003**

(51) Int Cl.:
***A01N 43/32*** *(2006.01)* ***A01N 43/50*** *(2006.01)*
***A01N 43/76*** *(2006.01)*

(86) Internationale Anmeldenummer:
**PCT/EP2003/006890**

(87) Internationale Veröffentlichungsnummer:
**WO 2004/008855 (29.01.2004 Gazette 2004/05)**

(54) **FUNGIZIDE MISCHUNGEN**
FUNGICIDE MIXTURES
MELANGES FONGICIDES

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**LT LV**

(30) Priorität: **18.07.2002 DE 10232751**

(43) Veröffentlichungstag der Anmeldung:
**27.04.2005 Patentblatt 2005/17**

(73) Patentinhaber: **BASF Aktiengesellschaft**
**67056 Ludwigshafen (DE)**

(72) Erfinder:
- **AMMERMANN, Eberhard**
**64646 Heppenheim (DE)**
- **STIERL, Reinhard**
**67251 Freinsheim (DE)**
- **SCHÖFL, Ulrich**
**68782 Brühl (DE)**
- **SCHELBERGER, Klaus**
**67161 Gönnheim (DE)**
- **SCHERER, Maria**
**76829 Godramstein (DE)**
- **HENNINGSEN, Michael**
**67227 Frankenthal (DE)**
- **GOLD, Randall, Even**
**67283 Obrigheim (DE)**

(56) Entgegenhaltungen:
**EP-A- 0 236 689** **EP-A- 1 023 834**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 524 904 B1

Printed by Jouve, 75001 PARIS (FR)

## Beschreibung

Die vorliegende Erfindung betrifft fungizide Mischungen, enthaltend

A) ein Phenylhydrazid I ausgewählt aus den Verbindungen Ia und Ib

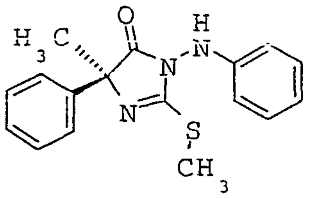 Ia 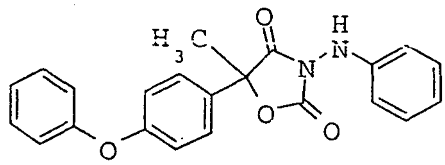 Ib

und

B) die Verbindung der Formel II

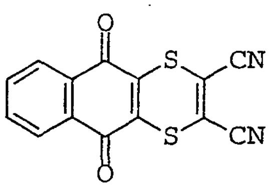 II

in einer synergistisch wirksamen Menge.

Außerdem betrifft die Erfindung Verfahren zur Bekämpfung von Schadpilzen mit Mischungen der Verbindungen I und II und die Verwendung der Verbindungen I und II zur Herstellung derartiger Mischungen, sowie diese enthaltende Mittel.

Die Verbindungen I, ihre Herstellung und ihre Wirkung gegen Schadpilze sind aus der Literatur bekannt:

| Verbindung Nr. | common name | Literatur |
|---|---|---|
| Ia | Fenamidone | Proc. Br. Crop. Prot. Conf. - Pests Dis. 1998, Bd.1, S. 319 |
| Ib | Famoxadone | Proc. Br. Crop. Prot. Conf. - Pests Dis. 1996, Bd.1, S. 21 |

Die Verbindung der Formel II (common name: dithianon) sowie Verfahren zu ihrer Herstellung sind in GB-A 857 383 beschrieben.

Die fungizide Aktivität der bekannten Verbindungen und insbesondere die Langzeitwirkung der Phenylhydrazide I läßt jedoch oftmals zu wünschen übrig.

Der vorliegenden Erfindung lag daher die Aufgabe zugrunde, den genannten Nachteilen abzuhelfen und fungizide Mischungen bereitzustellen, die bei verringerter Gesamtmenge an ausgebrachten Wirkstoffen eine verbesserte Wirkung, insbesondere Dauerwirkung, gegen Schadpilze zeigen (synergistische Mischungen).

Demgemäß wurden die eingangs definierten Mischungen gefunden. Es wurde außerdem gefunden, daß sich bei gleichzeitiger gemeinsamer oder getrennter Anwendung der Verbindungen I und II oder bei Anwendung der Verbindungen I und II nacheinander Schadpilze besser bekämpfen lassen als mit den Einzelverbindungen.

Üblicherweise kommen Mischungen der Verbindung I mit einem Phenylhydrazid II zur Anwendung. Unter Umständen können sich jedoch auch Mischungen der Verbindungen I und II mit weiteren Fungiziden als vorteilhaft erweisen.

Besonders bevorzugt wird die Verbindung Ia.

Die Verbindungen Ia und Ib sind wegen ihres basischen Charakters in der Lage, mit anorganischen oder organischen Säuren oder mit Metallionen Salze oder Addukte zu bilden.

Beispiele für anorganische Säuren sind Halogenwasserstoffsäuren wie Fluorwasserstoff, Chlorwasserstoff, Bromwasserstoff und Jodwasserstoff, Schwefelsäure, Phosphorsäure, Kohlensäure und Salpetersäure.

Als organische Säuren kommen beispielsweise Ameisensäure, und Alkansäuren wie Essigsäure, Trifluoressigsäure, Trichloressigsäure und Propionsäure sowie Glycolsäure, Thiocyansäure, Milchsäure, Bernsteinsäure, Zitronensäure, Benzoesäure, Zimtsäure, Oxalsäure, Alkylsulfonsäuren (Sulfonsäuren mit geradkettigen oder verzweigten Alkylresten mit 1 bis 20 Kohlenstoffatomen), Arylsulfonsäuren oder -disulfonsäuren (aromatische Reste wie Phenyl und Naphthyl welche eine oder zwei Sulfonsäuregruppen tragen), Alkylphosphonsäuren (Phosphonsäuren mit geradkettigen oder verzweigten Alkylresten mit 1 bis 20 Kohlenstoffatomen), Arylphosphonsäuren oder -diphosphonsäuren (aromatische Reste wie Phenyl und Naphthyl welche eine oder zwei Phosphohsäurereste tragen), wobei die Alkyl- bzw. Arylreste weitere Substituenten tragen können, z.B. p-Toluolsulfonsäure, Salizylsäure, p-Aminosalizylsäure, 2-Phenoxybenzoesäure, 2-Acetoxybenzoesäure etc., in Betracht.

Als Metallionen kommen insbesondere die Ionen der Elemente der zweiten Hauptgruppe, insbesondere Calzium und Magnesium, der dritten und vierten Hauptgruppe, insbesondere Aluminium, Zinn und Blei, sowie der ersten bis achten Nebengruppe, insbesondere Chrom, Mangan, Eisen, Kobalt, Nickel, Kupfer, Zink und andere in Betracht. Besonders bevorzugt sind die Metallionen der Elemente der Nebengruppen der vierten Periode. Die Metalle können dabei in den verschiedenen ihnen zukommenden Wertigkeiten vorliegen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstums - regulierende Wirkstoffe oder Düngemittel beimischen kann.

Die Mischungen der Verbindungen I und II bzw. die gleichzeitige gemeinsame oder getrennte Verwendung der Verbindungen I und II zeichnen sich durch eine hervorragende Wirkung gegen ein breites Spektrum von pflanzenpathogenen Pilzen, insbesondere aus der Klasse der *Ascomyceten, Deuteromyceten, Phycomyceten* und *Basidiomyceten,* aus.

Besondere Bedeutung haben sie für die Bekämpfung einer Vielzahl von Pilzen an verschiedenen Kulturpflanzen wie Baumwolle, Gemüsepflanzen (z.B. Gurken, Bohnen und Kürbisgewächse), Kaffee, Obstpflanzen, Soja, Wein, Zierpflanzen, und einer Vielzahl von Samen.

Insbesondere eignen sie sich zur Bekämpfung der folgenden pflanzenpathogenen Pilze: *Erysiphe cichoracearum* und *Sphaerotheca fuliginea* an Kürbisgewächsen, *Podosphaera leucotricha* an Äpfeln, *Uncinula necator* an Reben, Venturia *inaequalis* (Schorf) an Äpfeln, *Septoria nodorum* an Weizen, *Botrytis cinerea* (Grauschimmel) an Erdbeeren, Gemüse, Zierpflanzen und Reben, *Cercospora arachidicola* an Erdnüssen, *Phytophthora infestans* an Kartoffeln und Tomaten, *Pseudoperonospora-Arten* an Kürbisgewächsen und Hopfen, *Plasmopara viticola* an Reben, *Alternaria*-Arten an Gemüse und Obst sowie *Fusarium*- und *Verticillium*-Arten.

Die Verbindungen I und II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und II werden üblicherweise in einem Gewichtsverhältnis von 100:1 bis 1:10, vorzugsweise 10:1 bis 1:1, insbesondere 5:1 bis 1:1 angewandt.

Die Aufwandmengen für die Verbindung I liegen entsprechend in der Regel bei 5 bis 2000 g/ha, vorzugsweise 10 bis 1000 g/ha, insbesondere 50 bis 750 g/ha.

Die Aufwandmengen der erfindungsgemäßen Mischungen liegen je nach Art des gewünschten Effekts für die Verbindungen II bei 5 g/ha bis 500 g/ha, vorzugsweise 50 bis 500 g/ha, insbesondere 50 bis 200 g/ha.

Bei der Saatgutbehandlung werden im allgemeinen Aufwandmengen an Mischung von 0,001 bis 1 g/kg Saatgut, vorzugsweise 0,01 bis 0,5 g/kg, insbesondere 0,01 bis 0,1 g/kg verwendet.

Sofern für Pflanzen pathogene Schadpilze zu bekämpfen sind, erfolgt die getrennte oder gemeinsame Applikation der Verbindungen I und II oder der Mischungen aus den Verbindungen I und II durch Besprühen oder Bestäuben der Samen, der Pflanzen oder der Böden vor oder nach der Aussaat der Pflanzen oder vor oder nach dem Auflaufen der Pflanzen.

Die erfindungsgemäßen fungiziden synergistischen Mischungen bzw. die Verbindungen I und II können beispielsweise in Form von direkt versprühbaren Lösungen, Pulver und Suspensionen oder in Form von hochprozentigen wäßrigen, öligen oder sonstigen Suspensionen, Dispersionen, Emulsionen, Öldispersionen, Pasten, Stäubemitteln, Streumitteln oder Granulaten aufbereitet und durch Versprühen, Vernebeln, Verstäuben, Verstreuen oder Gießen angewendet werden. Die Anwendungsform ist abhängig vom Verwendungszweck; sie soll in jedem Fall eine möglichst feine und gleichmäßige Verteilung der erfindungsgemäßen Mischung gewährleisten.

Die Formulierungen werden in an sich bekannter Weise hergestellt, z.B. durch Zugabe von Lösungsmitteln und/oder Trägerstoffen. Den Formulierungen werden üblicherweise inerte Zusatzstoffe wie Emulgiermittel oder Dispergiermittel beigemischt.

Als oberflächenaktive Stoffe kommen die Alkali-, Erdalkali-, Ammoniumsalze von aromatischen Sulfonsäuren, z.B. Lignin-, Phenol-, Naphthalin- und Dibutylnaphthalinsulfonsäure, sowie von Fettsäuren, Alkyl- und Alkylarylsulfonaten, Alkyl-, Laurylether- und Fettalkoholsulfaten, sowie Salze sulfatierter Hexa-, Hepta- und Octadecanole oder Fettalkoholglycolethern, Kondensationsprodukte von sulfoniertem Naphthalin und seinen Derivaten mit Formaldehyd, Kondensationsprodukte des Naphthalins bzw. der Naphthalinsulfonsäuren mit Phenol und Formaldehyd, Polyoxyethylenoctylphenylether, ethoxyliertes Isooctyl-, Octyl- oder Nonylphenol, Alkylphenyl- oder Tributylphenylpolyglycolether, Alkylarylpolyetheralkohole, Isotridecylalkohol, Fettalkoholethylenoxid- Kondensate, ethoxyliertes Rizinusöl, Polyoxyethylenalkylether oder Polyoxypropylen = alkylether, Laurylalkoholpolyglycoletheracetat, Sorbitester, Lignin-Sulfitablaugen oder Methylcellulose in Betracht.

Pulver, Streu- und Stäubemittel können durch Mischen oder gemeinsames Vermahlen der Verbindungen I und II oder der Mischung aus den Verbindungen I und II mit einem festen Trägerstoff hergestellt werden.

Granulate (z.B. Umhüllungs-, Imprägnierungs- oder Homogengranulate) werden üblicherweise durch Bindung des Wirkstoffs oder der Wirkstoffe an einen festen Trägerstoff hergestellt.

Als Füllstoffe bzw. feste Trägerstoffe dienen beispielsweise Mineralerden wie Silicagel, Kieselsäuren, Kieselgele, Silikate, Talkum, Kaolin, Kalkstein, Kalk, Kreide, Bolus, Löß, Ton, Dolomit, Diatomeenerde, Kalzium- und Magnesiumsulfat, Magnesiumoxid, gemahlene Kunststoffe, sowie Düngemittel wie Ammoniumsulfat, Ammoniumphosphat, Ammoniumnitrat, Harnstoffe und pflanzliche Produkte wie Getreidemehl, Baumrinden-, Holz- und Nußschalenmehl, Cellulosepulver oder andere feste Trägerstoffe.

Die Formulierungen enthalten im allgemeinen 0,1 bis 95 Gew.-%, vorzugsweise 0,5 bis 90 Gew.-% einer der Verbindungen I und II bzw. der Mischung aus den Verbindungen I und II. Die Wirkstoffe werden dabei in einer Reinheit von 90 % bis 100 %, vorzugsweise 95 % bis 100 % (nach NMR- oder HPLC-Spektrum) eingesetzt.

Die Verbindungen I und II bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Beispiele für solche Zubereitungen, welche die Wirkstoffe enthalten, sind:

I. eine Lösung aus 90 Gew.-Teilen der Wirkstoffe und 10 Gew.-Teilen N-Methylpyrrolidon, die zur Anwendung in Form kleinster Tropfen geeignet ist;

II. eine Mischung aus 20 Gew.-Teilen der Wirkstoffe, 80 Gew.-Teilen Xylol, 10 Gew.-Teilen des Anlagerungsproduktes von 8 bis 10 Mol Ethylenoxid an 1 Mol Ölsäure-N-monoethanolamid, 5 Gew.-Teilen Calciumsalz der Dodecylbenzolsulfonsäure, 5 Gew.-Teilen des Anlagerungsproduktes von 40 Mol Ethylenoxid an 1 Mol Ricinusöl; durch feines Verteilen der Lösung in Wasser erhält man eine Dispersion;

III. eine wäßrige Dispersion aus 20 Gew.-Teilen der Wirkstoffe, 40 Gew.-Teilen Cyclohexanon, 30 Gew.-Teilen Isobutanol, 20 Gew.-Teilen des Anlagerungsproduktes von 40 Mol Ethylenoxid an 1 Mol Ricinusöl;

IV. eine wäßrige Dispersion aus 20 Gew.-Teilen der Wirkstoffe, 25 Gew.-Teilen Cyclohexanol, 65 Gew.-Teilen einer Mineralölfraktion vom Siedepunkt 210 bis 280°C und 10 Gew.-Teilen des Anlagerungsproduktes von 40 Mol Ethylenoxid an 1 Mol Ricinusöl;

V. eine in einer Hammermühle vermahlene Mischung aus 80 Gew.-Teilen der Wirkstoffe, 3 Gew.-Teilen des Natriumsalzes der Diisobutylnaphthalin-1-sulfonsäure, 10 Gew.-Teilen des Natriumsalzes einer Ligninsulfonsäure aus einer Sulfitablauge und 7 Gew.-Teilen pulverförmigem Kieselsäuregel; durch feines Verteilen der Mischung in Wasser erhält man eine Spritzbrühe;

VI. eine innige Mischung aus 3 Gew.-Teilen der Wirkstoffe und 97 Gew.-Teilen feinteiligem Kaolin; dieses Stäubemittel enthält 3 Gew.-% Wirkstoff;

VII.eine innige Mischung aus 30 Gew.-Teilen der Wirkstoffe, 92 Gew.-Teilen pulverförmigem Kieselsäuregel und 8 Gew.-Teilen Paraffinöl, das auf die Oberfläche dieses Kieselsäuregels gesprüht wurde; diese Aufbereitung gibt dem Wirkstoff eine gute Haftfähigkeit;

VIII.eine stabile wäßrige Dispersion aus 40 Gew.-Teilen der Wirkstoffe, 10 Gew.-Teilen des Natriumsalzes eines Phenolsulfonsäure-Harnstoff-Formaldehyd-Kondensates, 2 Gew.-Teilen Kieselgel und 48 Gew.-Teilen Wasser, die weiter verdünnt werden kann;

IX. eine stabile ölige Dispersion aus 20 Gew.-Teilen der Wirkstoffe, 2 Gew.-Teilen des Calciumsalzes der Dodecylbenzolsulfonsäure, 8 Gew.-Teilen Fettalkohol-polyglykolether, 20 Gew.-Teilen des Natriumsalzes eines Phenolsulfonsäure-Harnstoff-Formaldehydkondensates und 88 Gew.-Teilen eines paraffinischen Mineralöls.

Die fungizide Wirkung der Verbindung und der Mischungen läßt sich durch folgende Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Anwendungsbeispiel: Dauerwirksamkeit gegen Rebenperonospora verursacht durch *Plasmopara viticola*

Blätter von Topfreben der Sorte "Müller-Thurgau" wurden mit wässriger Suspension in der unten angegebenen Wirkstoffkonzentration bis zur Tropfnässe besprüht. Um die Dauerwirkung der Substanzen beurteilen zu können, wurden die Pflanzen nach dem Antrocknen des Spritzbelages für 3 Tage im Gewächshaus aufgestellt. Erst dann wurden die Blätter mit einer wässrigen Zoosporenaufschwemmung von *Plasmopara viticola* inokuliert. Danach wurden die Reben

zunächst für 48 Stunden in einer wasserdampfgesättigten Kammer bei 24°C und anschließend für 5 Tage im Gewächshaus bei Temperaturen zwischen 20 und 30°C aufgestellt. Nach dieser Zeit wurden die Pflanzen zur Beschleunigung des Sporangienträgerausbruchs abermals für 16 Stunden in eine feuchte Kammer gestellt. Dann wurde das Ausmaß der Befallsentwicklung auf den Blattunterseiten visuell ermittelt.

Zur Auswertung wurden die visuell ermittelten Werte für den Prozentanteil befallener Blattflächen in Wirkungsgrade als % der unbehandelten Kontrolle umgerechnet.

Der Wirkungsgrad (W) wird nach der Formel von Abbot wie folgt berechnet:

$$W = (1 - \alpha/\beta) \bullet 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.

Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b.

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | Kontrolle (unbehandelt) | (88 % Befall) | 0 |
| 2 | Ia (Fenamidone) | 6<br>3<br>1,5<br>0,75<br>0,375 | 94<br>89<br>93<br>77<br>66 |
| 3 | Ib (Famoxadone) | 6<br>3<br>1,5<br>0,75<br>0,375 | 89<br>89<br>83<br>77<br>0 |
| 4 | II (Dithianon) | 15<br>7,5<br>3,75 | 32<br>20<br>0 |

Tabelle B - erfindungsgemäße Kombinationen

| Beispiel | Wirkstoffmischung Konzentration Mischungsverhältnis | beobachteter Wirkungsgrad | berechneter Wirkungsgrad*) |
|---|---|---|---|
| 5 | Ia + II<br>1,5 + 15 ppm<br>1 : 10 | 100 | 88 |
| 6 | Ia + II<br>0,75 + 7,5 ppm<br>1 : 10 | 97 | 82 |
| 7 | Ia + II<br>0,375 + 3,75 ppm<br>1 : 10 | 100 | 66 |
| 8 | Ia + II<br>3 + 3,75 ppm<br>1 : 1,25 | 100 | 89 |
| 9 | Ia + II<br>6 + 3,75 ppm<br>1,6 : 1 | 100 | 94 |
| 10 | Ib + II<br>1,5 + 15 ppm<br>1 : 10 | 100 | 88 |
| 11 | Ib + II<br>0,75 + 7,5 ppm<br>1 : 10 | 94 | 82 |
| 12 | Ib + II<br>0,375 + 3,75 ppm<br>1 : 10 | 77 | 0 |
| 13 | Ib + II<br>3 + 3,75 ppm<br>1 : 1,25 | 100 | 89 |
| 14 | Ib + II<br>6 + 3,75 ppm<br>1,6 : 1 | 100 | 89 |
| *) berechneter Wirkungsgrad nach der Colby-Formel | | | |

Aus den Ergebnissen des Versuchs geht hervor, daß der beobachtete Wirkungsgrad in allen Mischungsverhältnissen höher ist, als nach der Colby-Formel vorausberechnet.

## Patentansprüche

**1.** Fungizide Mischung, enthaltend

A) ein Phenylhydrazid I ausgewählt aus den Verbindungen Ia und Ib

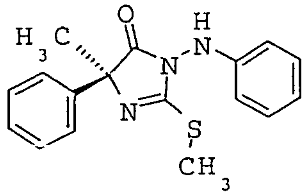 Ia

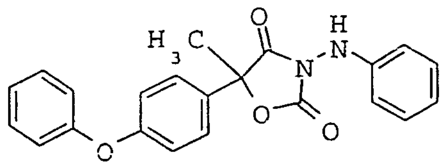 Ib

und

B) die Verbindung der Formel II

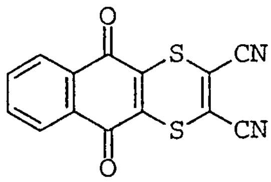

II

in einer synergistisch wirksamen Menge.

2. Fungizide Mischungen nach Anspruch 1, enthaltend als Phenylhydrazid I die Verbindung Ia gemäß Anspruch 1.

3. Fungizide Mischungen nach den Ansprüchen 1 oder 2, **dadurch gekennzeichnet, daß** das Gewichtsverhältnis der Verbindung I zu der Verbindung II 10:1 bis 1:100 ist.

4. Fungizides Mittel, enthaltend einen festen oder flüssigen Trägerstoff und eine Mischung gemäß Anspruch 1.

5. Nicht therapeutisches Verfahren zur Bekämpfung von Schadpilzen, **dadurch gekennzeichnet, daß** man die Schadpilze, deren Lebensraum oder die von ihnen freizuhaltenden Pflanzen, Samen, Böden, Flächen, Materialien oder Räume einer Verbindung der Formel I und der Verbindung der Formel II gemäß Anspruch 1 behandelt.

6. Verfahren nach Anspruch 5, **dadurch gekennzeichnet, daß** man die Schadpilze, deren Lebensraum oder die von ihnen freizuhaltenden Pflanzen, Samen, Böden, Flächen, Materialien oder Räume mit 5 bis 2000 g/ha der Verbindung II gemäß Anspruch 1 behandelt.

7. Verfahren nach Anspruch 5, **dadurch gekennzeichnet, daß** man die Schadpilze, deren Lebensraum oder die von ihnen freizuhaltenden Pflanzen, Samen, Böden, Flächen, Materialien oder Räume mit 5 bis 500 g/ha mindestens einer Verbindung I gemäß Anspruch 1 behandelt.

8. Verwendung der Verbindungen der Formeln I und II gemäß Anspruch 1 zur Herstellung einer Mischung gemäß Anspruch 1.

## Claims

1. A fungicidal mixture, comprising

A) a phenylhydrazide I selected from the compounds Ia and Ib

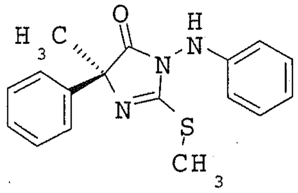

Ia

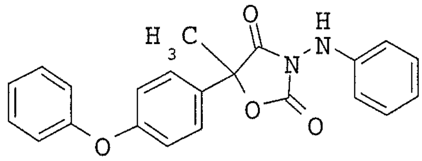

Ib

and

B) the compound of the formula II

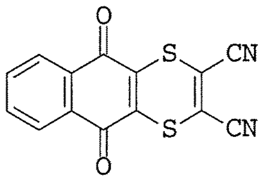

II

in a synergistically effective amount.

2. The fungicidal mixture according to claim 1, comprising as phenylhydrazide I the compound Ia according to claim 1.

3. The fungicidal mixture according to claim 1 or 2, wherein the weight ratio of the compound I to the compound II is from 10:1 to 1:100.

4. A fungicidal composition comprising a solid or liquid carrier and a mixture according to claim 1.

5. A non-therapeutic method for controlling harmful fungi, which comprises treating the harmful fungi, their habitat, or the plants, seeds, soils, areas, materials or spaces to be kept free from them with a compound of the formula I and the compound of the formula II according to claim 1.

6. The method according to claim 5, which comprises treating the harmful fungi, their habitat or the plants, seeds, soils, areas, materials or spaces to be kept free from them with from 5 to 2000 g/ha of the compound II according to claim 1.

7. The method according to claim 5, which comprises treating the harmful fungi, their habitat, or the plants, seeds, soils, areas, materials or spaces to be kept free from them with from 5 to 500 g/ha of at least one compound I according to claim 1.

8. The use of the compounds of the formulae I and II according to claim 1 for preparing a mixture according to claim 1.

## Revendications

1. Mélange fongicide contenant

A) un phénylhydrazide I choisi parmi les composés Ia et Ib

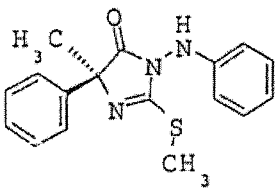

Ia

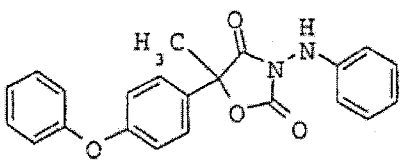

Ib

et

B) un composé de la formule II :

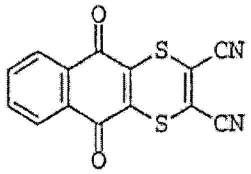

II

en une quantité efficace du point de vue synergique.

**2.** Mélanges fongicides suivant la revendication 1, contenant, comme phénylhydrazide I, le composé Ia suivant la revendication 1.

**3.** Mélanges fongicides suivant les revendications 1 ou 2, **caractérisés en ce que** le rapport pondéral entre le composé I et le composé II est de 10/1 à 1/100.

**4.** Produit fongicide, contenant un support solide ou liquide et un mélange suivant la revendication 1.

**5.** Procédé non thérapeutique de lutte contre les champignons nuisibles, **caractérisé en ce qu'**on traite les champignons nuisibles, leur environnement ou les plantes, semences, sols, surfaces, matériels ou espaces à libérer de ceux-ci, par un composé de la formule I et le composé de la formule II suivant la revendication 1.

**6.** Procédé suivant la revendication 5, **caractérisé en ce qu'**on traite les champignons nuisibles, leur environnement ou les plantes, semences, sols, surfaces, matériels ou espaces à libérer de ceux-ci avec 5 à 2000 g/ha du composé II suivant la revendication 1.

**7.** Procédé suivant la revendication 5, **caractérisé en ce qu'**on traite les champignons nuisibles, leur environnement ou les plantes, semences, sols, surfaces, matériels ou espaces à libérer de ceux-ci avec 5 à 500 g/ha d'au moins un composé I suivant la revendication 1.

**8.** Utilisation des composés des formules I et II suivant la revendication 1, pour la préparation d'un mélange suivant la revendication 1.